(19) Europäisches Patentamt
European Patent Office
Office européen des brevets

(11) **EP 3 342 148 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(21) Anmeldenummer: **16757216.3**

(22) Anmeldetag: **22.08.2016**

(51) Int Cl.:
*H04N 5/225* (2006.01)    *H04N 5/232* (2006.01)
*H04N 5/247* (2006.01)    *H04N 13/243* (2018.01)

(86) Internationale Anmeldenummer:
**PCT/EP2016/069821**

(87) Internationale Veröffentlichungsnummer:
**WO 2017/032749 (02.03.2017 Gazette 2017/09)**

(54) **3D-MULTI-APERTUR-ABBILDUNGSVORRICHTUNG**

3D MULTI-APERTURE IMAGING DEVICE

DISPOSITIF IMAGEUR MULTI-OUVERTURES 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2015 DE 102015216140**

(43) Veröffentlichungstag der Anmeldung:
**04.07.2018 Patentblatt 2018/27**

(73) Patentinhaber: **Fraunhofer-Gesellschaft zur Förderung der angewandten Forschung e.V.
80686 München (DE)**

(72) Erfinder:
• **WIPPERMANN, Frank
98617 Meiningen (DE)**

• **BRÜCKNER, Andreas
07743 Jena (DE)**
• **BRÄUER, Andreas
07646 Schlöben (DE)**
• **OBERDÖRSTER, Alexander
07749 Jena (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
**WO-A2-2011/063347    DE-B3-102013 222 780
DE-B3-102014 213 371    US-B1- 9 013 543**

**Beschreibung**

Die vorliegende Anmeldung bezieht sich auf eine 3D-Multiaperturabbildungsvorrichtung.

Multiaperturabbildungssysteme mit linearer Kanalanordnung bestehen aus mehreren nebeneinander angeordneten Abbildungskanälen, die jeweils nur einen Teil des Objekts aufnehmen. Das Gesamtbild ergibt sich dabei aus einer Zusammenführung bzw. Verschmelzung der einzelnen Teilbilder. Durch den endlichen Abstand der Abbildungskanäle zueinander tritt Parallaxe auf, die insbesondere bei kurzen Objektabständen merklich ist und zu Artefakten in den zusammengesetzten Gesamtbildern führt. Daneben gibt es Multiaperturabbildungssysteme, bei denen die einzelnen Kanäle ein und dieselbe Szene jeweils gänzlich aufnehmen, wobei aus der Parallaxe zwischen den Kanälen eine Information über die Tiefe des Objekts bzw. der Szene herausgerechnet wird.

Probleme ergeben sich dann, wenn eine hohe räumliche bzw. laterale Auflösung der Szene mit einem relativ weiten Gesichtsfeld einerseits und die Erzeugung von Tiefeninformationen andererseits mit ein und demselben Abbildungssystem gewünscht werden.

In WO 2011/063347 A2 werden Systeme und Verfahren zum Implementieren von Arraykameras, die zum Ausführen einer Superauflösungsverarbeitung konfiguriert sind, um superaufgelöste Bilder mit höherer Auflösung unter Verwendung einer Vielzahl von aufgenommenen Bildern und Linsenstapelarrays zu erzeugen, die in Arraykameras verwendet werden können, beschrieben.

In US 9,013,543 B1 werden Systeme, Verfahren und Herstellungsartikel zum Minimieren der Parallaxe basierend auf der Erstellung der Tiefenkarte beschrieben.

In DE 10 2013 222 780 B3 ist eine Multiapperturvorrichtung zur Erfassung eines Objektbereichs mit zumindest zwei optischen Kanälen zur Erfassung eines ersten Teilbereichs des Objektbereichs und zumindest zwei optischen Kanälen zur Erfassung eines zweiten Teilbereichs des Objektbereichs. Die optischen Kanäle zur Erfassung des ersten und des zweiten Teilbereichs sind in einer einzeiligen Struktur verschränkt angeordnet, wobei sich der erste und der zweite Teilbereich zumindest teilweise überlappen.

Die vorliegende Erfindung schafft eine 3D-Multiaperturabbildungsvorrichtung, die es ermöglicht, eine hohe laterale Auflösung und/oder ein weites Gesichtsfeld zu erzielen, wobei zusätzlich Tiefeninformationen ableitbar sind.

Diese Aufgabe wird durch den Gegenstand der unabhängigen Patentansprüche gelöst.

Die vorliegende Anmeldung beruht auf der Erkenntnis, dass eine 3D-Multiaperturabbildungsvorrichtung geschaffen werden kann, die einerseits in der Lage ist, eine 3D-Information über die Szene bereitzustellen und andererseits die Erzielung einer hohen lateralen Auflösung und/oder eines weiten Gesichtsfeldes ermöglicht, indem die 3D-Multiaperturabbildungsvorrichtung mit einer ersten Mehrzahl von optischen Kanälen zum Abbilden sich überlappender erster Teilgesichtsfelder eines Gesamtgesichtsfeldes auf erste Bildsensorbereiche eines Bildsensors der 3D-Multiaperturabbildungsvorrichtung ausgestattet wird sowie mit einer zweiten Mehrzahl von optischen Kanälen zum Abbilden sich überlappender zweiter Teilgesichtsfelder des Gesamtgesichtsfeldes auf zweite Bildsensorbereiche des Bildsensors, wobei die erste und die zweite Mehrzahl von optischen Kanälen um einen Basisabstand voneinander lateral versetzt angeordnet sind, und wenn beim Verschmelzen von Bildern, die durch die erste Mehrzahl von optischen Kanälen aufgenommen sind, zu einem ersten Gesamtbild in einem Überlappbereich von ersten Teilgesichtsfeldern eines Paars von optischen Kanälen der ersten Mehrzahl von optischen Kanälen Disparitäten in einem Paar von Bildern verwendet werden, von denen eines durch einen der zweiten Mehrzahl von optischen Kanälen aufgenommen ist. Das Gesamtgesichtsfeld wird also zweimal in einander sich lediglich teilweise überlappende Teilgesichtsfelder aufgeteilt, nämlich einmal in Form der ersten Mehrzahl von optischen Kanälen und das andere Mal in Form der zweiten Mehrzahl von optischen Kanälen, wodurch es möglich ist, eine gewünschte laterale Auflösung und/oder eine gewünschte Weite des Gesamtgesichtsfeldes zu erzielen und Parallaxinformation über das Gesamtgesichtsfeldhinweg zu erhalten. Das Verschmelzen der vermittels die erste Mehrzahl von optischen Kanälen erhaltenen Bilder zu einem Gesamtbild leidet weniger an der Parallaxe, die zwischen den Kanälen der ersten Mehrzahl von optischen Kanälen auftritt, weil das Verschmelzen der Bilder, die durch die erste Mehrzahl von optischen Kanälen aufgenommen wurden, zu dem ersten Gesamtbild durch Disparitätsinformationen unterstützt wird, die durch Auswertung eines Bilds erhalten werden, das durch einen der Kanäle der zweiten Mehrzahl von optischen Kanälen aufgenommen wurde. Insbesondere ist es möglich, die lateralen Abstände zwischen den Kanälen der ersten Mehrzahl von optischen Kanälen gering zu halten. Die unvermeidlich dennoch auftretenden lateralen Abstände führen zu Parallaxe zwischen den Kanälen der ersten Mehrzahl von Kanälen. Bei der Verschmelzung der Bilder der ersten Mehrzahl von Kanälen kann nun aber die Objektabstandsabhängigkeit der Verschmelzung der Bilder im Überlappbereich gegenüber einer Vorgehensweise, die lediglich Disparitäten unter den Bildern der ersten Mehrzahl von optischen Kanälen auswertet, in verbesserter Form realisiert werden, indem die Disparitäten zwischen Bildern eines Paars von Bildern ausgenutzt werden, von denen eines über einen der zweiten Mehrzahl von optischen Kanälen aufgenommen worden ist. Das kann ein Paar von Bildern sein, von denen eines durch die erste und das andere durch die zweite Mehrzahl von Kanälen aufgenommen wurde, oder ein Paar von Bildern sein, von denen beide durch unterschiedliche Kanäle aus der ersten oder der zweiten Mehrzahl von Kanälen aufgenommen wurden. Für einen Überlappbereich können aber auch Disparitäten aus mehr als einem Paar von Bildern verwendet werden. Darunter könnte sich natürlich zusätzlich auch ein Paar von Bildern befinden, von den beide durch unterschiedliche Kanäle aus der zweiten Mehrzahl von Kanälen aufgenommen wurden, also ein Paar aus den Bildern, die zu verschmelzen sind.

Vorteilhafte Ausgestaltungen der vorliegenden Anmeldung sind Gegenstand der abhängigen Patentansprüche. Bevorzugte Ausführungsbeispiele der vorliegenden Anmeldung werden nachfolgend Bezug nehmend auf die Zeichnungen näher erläutert. Es zeigen:

Fig. 1     eine teilweise schematische dreidimensionale Teildarstellung einer 3D-Multiaperturabbildungsvorrichtung gemäß einem Ausführungsbeispiel.

Fig. 2     eine schematische Darstellung der Kanäle und ihrer Bildung von Disparitätsquellen für Überlappbereiche von Teilgesichtsfeldern von Kanälen, deren Bild zu verschmelzen sind;

Fig. 3     ein Raumbild eines mobilen Geräts, um einen Verbau der 3D-Multiaperturabbildungsvorrichtung zu illustrieren;

Fig. 4     eine dreidimensionale Darstellung eines Moduls einer 3D-Multiaperturabbildungsvorrichtung gemäß einem Ausführungsbeispiel, bei dem exemplarisch die Optiken über ein transparentes, von en Strahlengängen durchdrungenes Substrat getragen werden; und

Fig. 5a und b     Seitenansicht und Draufsicht eins Moduls einer 3D-Multiaperturabbildungsvorrichtung gemäß einem Ausführungsbeispiel, bei dem die optischen Achsen über eine Vorab-Divergenz in der Ebene der optischen Achsen verfügen und die Strahlumlenkvorrichtung die Divergenz in der anderen Richtung übernimmt, wodurch die Anzahl an Facetten der Umlenkvorrichtung verringert werden kann und die Neigungen auf eine Richtung beschränkbar ist.

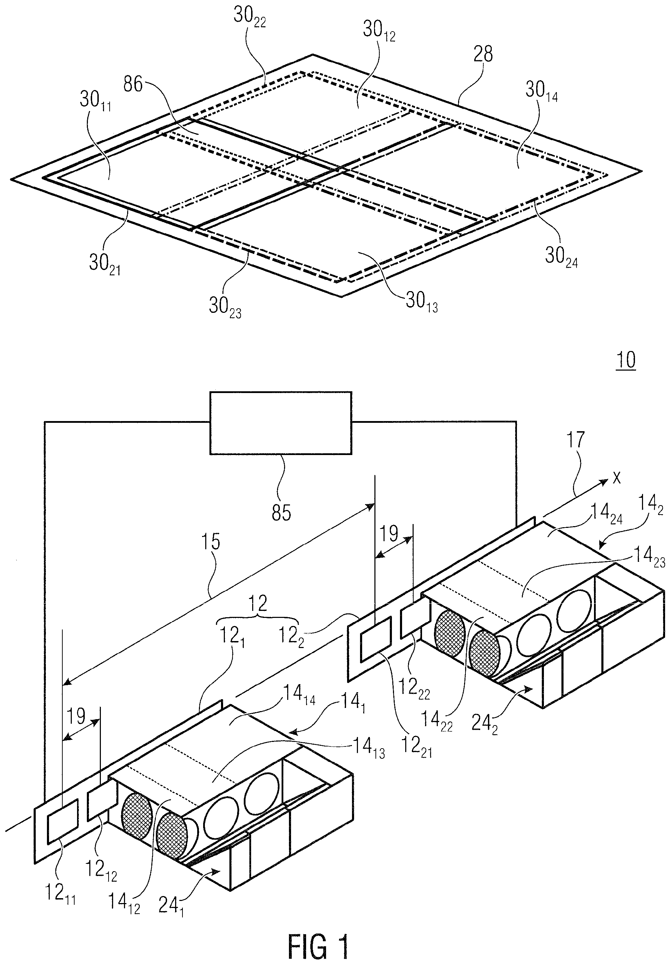

Fig. 1 zeigt eine 3D-Multiaperturabbildungsvorrichtung 10 gemäß einem Ausführungsbeispiel. Sie besitzt einen Bildsensor, der, wie es in Fig. 1 angedeutet ist, in zwei Komponenten $12_1$ bzw. $12_2$ aufgeteilt sein kann, eine Komponente $12_1$ für die "rechten" optischen Kanäle $14_1$ und die andere Komponente $12_2$ für die "linken" Kanäle $14_2$. Die rechten und die linken optischen Kanäle $14_1$ und $14_2$ sind bei dem Beispiel von Fig. 1 identisch aufgebaut, allerdings um einen Basisabstand 15 lateral versetzt voneinander angeordnet, um möglichst viele Tiefeninformationen bezüglich der im Gesichtsfeld der Vorrichtung 10 befindlichen Szene zu erhalten. Die Elemente, die mit einem Bezugszeichen versehen sind, das mit einem Index 1 an der ersten Position von links versehen ist, gehören somit zu der ersten Komponente 1 oder einem ersten Modul für die rechten Kanäle, Modul 1, der Vorrichtung 10 und die Elemente, die mit einem Bezugszeichen versehen sind, das mit einem Index 2 an der ersten Position von links versehen ist, gehören somit zu der zweiten Komponente 2 oder einem zweiten Modul für die linken Kanäle, Modul 2, der Vorrichtung 10. Obwohl die Anzahl der Module in Fig. 1 zwei ist, könnte die Vorrichtung auch mehr besitzen, die mit einem jeweiligen Basisabstand zueinander angeordnet sind.

In dem exemplarischen Fall von Fig. 1 umfasst jede Mehrzahl $14_1$ und $14_2$ von optischen Kanälen vier nebeneinander angeordnete optische Kanäle. Die einzelnen "rechten" Kanäle seien durch den zweiten tiefgestellten Index unterschieden. Die Kanäle seien dabei von rechts nach links indexiert. D.h., der optische Kanal $14_{11}$, der in Fig. 1 wegen einer zum Zwecke der Übersichtlichkeit gewählten Teilwegnahme nicht dargestellt ist, ist beispielsweise entlang der Basisabstandsrichtung 17, entlang welcher die linken und die rechten Kanäle voneinander unter dem Basisabstand 15 versetzt zueinander angeordnet sind, am äußersten rechten Rand angeordnet, d.h. am weitesten entfernt von der Mehrzahl $14_2$ linker Kanäle, wobei die anderen rechten Kanäle $14_{12}$ - $14_{14}$ entlang der Basisabstandsrichtung 17 folgen. Die Kanäle $14_{11}$ - $14_{14}$ bilden also ein einzeiliges Array von optischen Kanälen, dessen Zeilenerstreckungsrichtung der Basisabstandsrichtung 17 entspricht. Ebenso sind auch die linken Kanäle $14_2$ aufgebaut. Auch sie seien durch den zweiten tiefgestellten Index voneinander unterschieden. Die linken Kanäle $14_{21}$ - $14_{24}$ sind nebeneinander und in der gleichen Richtung aufeinanderfolgend angeordnet wie die rechten Kanäle $14_{11}$ - $14_{14}$, nämlich so, dass der Kanal $14_{21}$ den rechten Kanälen am nächsten ist und der Kanal $14_{24}$ am weitesten entfernt von Letztgenannten.

Jeder der rechten Kanäle $14_{11}$ - $14_{14}$ umfasst eine entsprechende Optik, die, wie es in Fig. 1 angedeutet ist, aus einem Linsensystem bestehen kann. Alternativ könnte jeder Kanal eine Linse aufweisen. Jeder optische Kanal $14_{11}$ - $14_{14}$ nimmt eines von sich überlappenden Teilgesichtsfeldern eines Gesamtgesichtsfeldes 28 auf, die sich gegenseitig überlappen und zusammen das Gesamtgesichtsfeld 28 abdecken. Der Kanal $14_{11}$ bildet beispielsweise das Teilgesichtsfeld $30_{11}$ auf einen Bildsensorbereich $12_{11}$ ab, der optische Kanal $14_{12}$ das Teilgesichtsfeld $30_{12}$ auf einen Bildsensorbereich $12_{12}$, der optische Kanal $14_{13}$ ein zugeordnetes Teilgesichtsfeld $30_{13}$ auf einen entsprechenden in Fig. 1 nicht sichtbaren Bildsensorbereich $12_{13}$ des Bildsensors 12 und der optische Kanal $14_{14}$ ein zugeordnetes Teilgesichtsfeld $30_{14}$ auf einen entsprechenden Bildsensorbereich $12_{14}$, der ebenfalls in Fig. 1 wegen Verdeckung nicht gezeigt ist.

In Fig. 1 sind die Bildsensorbereiche $12_{11}$ - $12_{14}$

des Bildsensors 12 bzw. der Komponente $12_1$ des Bildsensors 12 in einer Ebene parallel zur Basisabstandsrichtung 15 bzw. parallel zur Zeilenerstreckungsrichtung 17 angeordnet, und zu dieser Ebene sind auch Linsenebenen der Optiken der optischen Kanäle $14_{11}$ - $14_{14}$ parallel. Zudem sind die Bildsensorbereiche $12_{11}$ - $12_{14}$ untereinander mit einem lateralen Interkanalabstand 19 angeordnet, mit welchem auch die Optiken der optischen Kanäle $14_{11}$ - $14_{14}$ untereinander in dieser Richtung angeordnet sind, so dass die optischen Achsen und Strahlengänge der optischen Kanäle $14_{11}$ - $14_{14}$ zwischen den Bildsensorbereichen $12_{11}$ - $12_{14}$ und den Optiken $14_{11}$ - $14_{14}$ parallel zueinander verlaufen. Beispielsweise sind Zentren der Bildsensorbereiche $12_{11}$ - $12_{14}$ und optische Zentren der Optiken der optischen Kanäle $14_{11}$ - $14_{14}$ auf der jeweiligen optischen Achse angeordnet, die senkrecht zu der vorerwähnten gemeinsamen Ebene der Bildsensorbereiche $12_{11}$ - $12_{14}$ verlaufen.

Die optischen Achsen bzw. Strahlengänge der optischen Kanäle $14_{11}$ - $14_{14}$ werden durch eine Strahlumlenkvorrichtung $24_1$ umgelenkt und damit mit einer Divergenz versehen, die dazu führt, dass sich die Teilgesichtsfelder $30_{11}$ - $30_{14}$ der optischen Kanäle $14_{11}$ - $14_{14}$ gegenseitig nur teilweise überlappen, wie z.B. so, dass sich paarweise die Teilgesichtsfelder $30_{11}$ - $30_{14}$ höchstens zu 50 % im Raumwinkelsinne überlappen. Die Strahlumlenkvorrichtung $24_1$ kann, wie es in Fig. 1 angedeutet ist, beispielsweise für jeden optischen Kanal $14_{11}$ - $14_{14}$ eine reflektive Facette aufweisen, die unter den Kanälen $14_{11}$ - $14_{14}$ unterschiedlich gegeneinander verkippt sind. Eine mittlere Neigung der reflektiven Facetten gegenüber der Bildsensorebene lenkt das Gesamtgesichtsfeld der rechten Kanäle $14_{11}$ - $14_{14}$ in eine Richtung um, die beispielsweise senkrecht zu der Ebene steht, in welcher die optischen Achsen der Optiken der optischen Kanäle $14_{11}$ - $14_{14}$ vor bzw. ohne Strahlumlenkung durch die Vorrichtung $24_1$ verlaufen, oder weicht von dieser senkrechten Richtung weniger als 10° ab. Alternativ könnte die Strahlumlenkvorrichtung $24_1$ auch Prismen zur Strahlumlenkung der einzelnen optischen Achsen bzw. Strahlengänge der optischen Kanäle $14_{11}$ - $14_{14}$ verwenden.

Die Strahlumlenkvorrichtung $24_1$ versieht die Strahlengänge der optischen Kanäle $14_{11}$ - $14_{14}$ mit einer Divergenz derart, dass die eigentlich linear in der Richtung 17 nebeneinander angeordneten Kanäle $14_{11}$ - $14_{14}$ das Gesamtgesichtsfeld 28 zweidimensional abdecken.

Es sei darauf hingewiesen, dass die Strahlengänge bzw. optischen Achsen auch von der beschrieben Parallelität abweichen könnten, dass dennoch die Parallelität der Strahlengänge der optischen Kanäle aber immer noch so ausgeprägt sein könnte, dass sich die Teilgesichtsfelder, die durch die einzelnen Kanäle $14_{11}$ - $14_{14}$ abgedeckt bzw. auf die jeweiligen Bildsensorbereiche $12_{11}$ - $12_{14}$ abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 10 abzudecken, die Strahlumlenkvorrichtung 24 die Strahlengänge so mit einer zusätzlichen Divergenz versieht, dass sich die Teilgesichtsfelder der Kanäle $14_{11}$ - $14_{14}$ weniger gegenseitig überlappen. Die Strahlumlenkvorrichtung $24_1$ sorgt beispielsweise dafür, dass das Gesamtgesichtsfeld einen über alle azimutalen Winkel bzw. über alle Transversalrichtungen gemittelten Öffnungswinkel aufweist, der größer ist als 1,5 mal dem entsprechenden mittleren Öffnungswinkel der Teilgesichtsfelder der optischen Kanäle $14_{11}$ - $14_{14}$.

Ebenso wie die rechten Kanäle $14_{11}$ - $14_{14}$ sind nun auch die linken Kanäle $14_{21}$ - $14_{24}$ aufgebaut und relativ zu jeweiligen zugeordneten Bildsensorbereichen $12_{21}$ - $12_{24}$ positioniert, wobei die in der gleichen Ebene wie die optischen Achsen der Kanäle $14_{11}$ - $14_{14}$ parallel zueinander verlaufenden optischen Achsen der optischen Kanäle $14_{21}$ - $14_{24}$ durch eine korrespondierende Strahlumlenkvorrichtung $24_2$ umgelenkt werden, so dass die optischen Kanäle $14_{21}$ - $14_{24}$ das gleiche Gesamtgesichtsfeld 28 in nahezu kongruenter Art und Weise aufnehmen, nämlich in Teilgesichtsfeldern $30_{21}$ - $30_{24}$, in die das Gesamtgesichtsfeld 28 zweidimensional aufgeteilt ist, die sich gegenseitig überlappen, und von denen jedes nahezu vollständig mit dem entsprechenden Teilgesichtsfeld $30_{11}$ - $30_{14}$ eines entsprechenden Kanals der rechten Kanäle $14_{11}$ - $14_{14}$ überlappt. Beispielsweise überlappen die Teilgesichtsfelder $30_{11}$ und das Teilgesichtsfeld $30_{21}$ nahezu vollständig miteinander, die Teilgesichtsfelder $30_{12}$ und $30_{22}$ usw.

Die Bildsensorbereiche $12_{11}$ - $12_{24}$ können beispielsweise jeweils aus einem Chip gebildet sein, der ein entsprechendes Pixelarray umfasst, wobei die Chips auf einem gemeinsamen Substrat bzw. einer gemeinsamen Platine montiert sein könnten oder gruppenweise auf mehreren Platinen, wie es in Fig. 1 angedeutet ist, und zwar für den Fall der getrennten Platzierung der Chips der Bildsensorbereiche $12_{11}$ - $12_{14}$ der Komponente $12_1$ auf einer Platine und die Chips der Bildsensorbereiche $12_{21}$ - $12_{24}$ der Komponente $12_2$ auf einer weiteren Platine. Alternativ wäre es natürlich auch möglich, dass die Bildsensorbereiche $12_{11}$ - $12_{24}$ zusammen oder gruppenweise, wie z.B. getrennt nach Zugehörigkeit zur Komponente $12_1$ und $12_2$, aus einem Teil eines gemeinsamen Pixelarrays, das sich kontinuierlich über die jeweiligen Bildsensorbereiche erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays an den jeweiligen Bildsensorbereichen ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen innerhalb einer Komponente $12_1$ und $12_2$.

Zusätzlich den vorerwähnten Komponenten umfasst die 3D-Multiaperturabbildungsvorrichtung einen Prozessor 85, der die Aufgabe übernimmt, beispielsweise die Bilder, die bei einer Aufnahme durch die 3D-Multiaperturabbildungsvorrichtung 10 durch die rechten optischen Kanäle $14_{11}$ - $14_{14}$ aufgenommen worden sind, zu einem ersten Gesamtbild zu verschmelzen. Das Problem, das dabei zu bewältigen ist, ist das Folgende: Aufgrund der Interkanalabstände 19 zwischen benachbarten Kanälen der rechten Kanäle $14_{11}$ - $14_{14}$ können die Bilder, die bei einer Aufnahme durch die Kanäle $14_{11}$ - $14_{14}$ in den Bildbereichen $12_{11}$ - $12_{14}$ aufgenommen werden, nicht einfach bzw. translatorisch gegenseitig verschoben und aufeinander gelegt werden. In anderen Worten ausgedrückt, lassen sie sich nicht ohne Weiteres aneinanderfügen. Disparität nennt man den lateralen Versatz entlang der Richtung 15, 17 bzw. 19 in den Bildern der Bildsensorbereiche $12_{11}$ - $12_{14}$ bei Aufnahme einer gleichen Szene, die einander korrespondieren sich aber in unterschiedlichen Bildern befinden. Die Disparität einander korrespondierender Bildinhalte hängt aber wiederum von der Entfernung dieses Bildinhalts in der Szene ab, d.h. der Entfernung des entsprechenden Objekts von der Vorrichtung 10. Der Prozessor 85 könnte nun versuchen, Disparitäten unter den Bildern der Bildsensorbereiche $12_{11}$ - $12_{14}$ selbst auszuwerten, um diese Bilder miteinander zu einem ersten Gesamtbild, nämlich zu einem "rechten Gesamtbild" zu verschmelzen. Nachteilig ist allerdings, dass die Interkanalabstand 19 zwar vorhanden ist, und damit eben erst das Problem hervorruft, dass der Interkanalabstand 19 aber andererseits auch relativ gering ist, so dass die Tiefenauflösung bzw. -abschätzung lediglich ungenau ist. Der Versuch, einander korrespondierende Bildinhalte in einem Überlappbereich zwischen zwei Bildern, wie z.B. in dem Überlappbereich 86 zwischen den Bildern der Bildsensorbereiche $12_{11}$ und $12_{12}$ beispielsweise mittels Korrelation zu ermitteln, ist deshalb schwierig.

Der Prozessor von Fig. 1 verwendet deshalb in dem Überlappbereich 86 zwischen den Teilgesichtsfeldern $30_{11}$ und $30_{12}$ zur Verschmelzung Disparitäten in einem Paar von Bildern, von denen eines durch einen der linken Kanäle $14_{21}$ oder $14_{22}$ aufgenommen ist, dessen abgebildetes zweites Teilgesichtsfeld, nämlich $30_{21}$ bzw. $30_{22}$, mit dem Überlappbereich 86 überlappt. Beispielsweise wertet der Prozess 85 zur Verschmelzung der Bilder der Bildsensorbereiche $12_{11}$ und $12_{12}$ Disparitäten in Bildern aus, von denen eines durch einen der Bildsensorbereiche $12_{21}$ oder $12_{22}$ und ein anderes durch einen der an dem Überlappbereich 86 beteiligten Kanäle aufgenommen ist, d.h. ein Bild, das durch einen der Bildsensorbereiche $12_{11}$ oder $12_{12}$ aufgenommen ist. Ein solches Paar besitzt dann einen Basisabstand von Grundbasisabstand 15 plus/minus einem oder keinem eines Kanalbasisabstands 19. Letzterer Basisabstand ist deutlich größer als ein einzelner Kanalbasisabstand 19, weshalb sich die Disparitäten in dem Überlappbereich 86 für den Prozessor 85 leichter ermitteln lassen. Der Prozessor 85 wertet deshalb für die Verschmelzung der Bilder der rechten Kanäle Disparitäten aus, die sich mit einem Bild der linken Kanäle ergibt und zwar vorzugsweise, aber nicht ausschließlich, zwischen Bildern von einem der rechten Kanäle und einem der linken Kanäle.

Spezifischer ausgedrückt, ist es möglich, dass der Prozessor 85 denjenigen Teil des Teilgesichtsfeldes $30_{11}$, der nicht mit einem der anderen Teilgesichtsfelder der rechten Kanäle überlappt, mehr oder weniger direkt aus dem Bild $12_{11}$ übernimmt und das Gleiche unternimmt für die nicht-überlappenden Bereiche der Teilgesichtsfelder $30_{12}$, $30_{13}$ und $30_{14}$ auf Basis der Bilder der Bildsensorbereiche $12_{12}$ - $12_{14}$, wobei die Bilder der Bildsensorbereiche $12_{11}$ - $12_{14}$ beispielsweise gleichzeitig aufgenommen wurden. Lediglich in den Überlappbereichen benachbarter Teilgesichtsfelder, wie z.B. der Teilgesichtsfelder $30_{11}$ und $30_{12}$, zieht dann der Prozessor 85 Disparitäten aus Bildpaaren heran, deren Überlapp im Gesamtgesichtsfeld 28 im Überlappbereich überlappt, aber von denen in der Mehrzahl aber nicht ausschließlich eines durch einen der rechten Kanäle aufgenommen wurde und das andere durch einen der linken Kanäle, wie z.B. wiederum zur gleichen Zeit.

Gemäß einer alternativen Vorgehensweise wäre es allerdings ebenfalls möglich, dass der Prozessor 85 alle Bilder des rechten Kanals warpt, und zwar gemäß einer Auswertung von Disparitäten zwischen Paaren von Bildern, von denen jeweils eines durch die rechten Kanäle und das andere durch die linken Kanäle aufgenommen wurde. So könnte beispielsweise das Gesamtbild, das durch den Prozessor 85 für die Bilder der rechten Kanäle berechnet wird, virtuell nicht nur im Überlappbereich der Teilgesichtsfelder $30_{11}$ - $30_{14}$ der rechten Kanäle, sondern auch in dem Nicht-Überlappbereich virtuell auf einen Blick-Punkt "gewarpt" werden, der beispielsweise lateral in der Mitte zwischen den rechten Kanälen $14_{11}$ - $14_{14}$ liegt, und zwar indem auch für diejenigen Bereiche der Teilgesichtsfelder $30_{11}$ - $30_{14}$, die sich nicht gegenseitig überlappen, Disparitäten aus Bildpaaren durch den Prozessor 85 ausgewertet werden, bei denen ein Bild durch einen der rechten Kanäle und ein anderes Bild durch einen der linken Kanäle aufgenommen wurde.

Die 3D-Multiaperturabbildungsvorrichtung 10 von Fig. 1 ist nicht nur in der Lage, ein Gesamtbild aus den Bildern der rechten Kanäle zu erzeugen, sondern die 3D-Multiaperturabbildungsvorrichtung 10 von Fig. 1 ist zumindest auch in einem Betriebsmodus in der Lage, aus einer Aufnahme zusätzlich zu dem Gesamtbild der ersten Kanäle auch ein Gesamtbild der Bilder der linken Kanäle und/oder zusätzlich zu dem Gesamtbild der rechten Kanäle eine Tiefenkarte zu erzeugen.

Gemäß der ersten Alternative ist der Prozessor 85 beispielsweise ausgebildet, um Bilder, die durch die linken optischen Kanäle $14_{21}$ - $14_{24}$ bzw. die Bildsensorbereiche $12_{21}$ - $12_{24}$ aufgenommen sind, zu einem zweiten Gesamtbild zu verschmelzen, nämlich einem Gesamtbild linken Kanals, und dabei in einem Überlappbereich von lateral benachbarten der Teilgesichtsfelder $30_{21}$ - $30_{24}$ der linken optischen Kanäle Disparitäten in einem Paar von Bildern zu verwenden, von denen in der Mehrzahl aber nicht ausschließlich eines durch einen rechten optischen Kanal $14_{11}$ - $14_{14}$ aufgenommen ist

und mit dem entsprechenden Überlappbereich des Paars von Teilgesichtsfeldern $30_{21}$ - $30_{24}$ überlappt, und das andere vorzugsweise durch einen der linken optischen Kanäle aufgenommen ist, dessen Teilgesichtsfeld mit dem jeweiligen Überlappbereich überlappt.

Gemäß der ersten Alternative gibt also für eine Aufnahme der Prozessor 85 zwei Gesamtbilder aus, nämlich eines für die rechten optischen Kanäle und das andere für die linken optischen Kanäle. Diese beiden Gesamtbilder könnten beispielsweise den beiden Augen des Benutzers getrennt zugeführt werden und somit zu einem dreidimensionalen Eindruck der aufgenommenen Szene führen.

Gemäß der anderen vorerwähnten Alternative erzeugt der Prozessor 85 zusätzlich zu dem Gesamtbild zu den rechten Kanälen eine Tiefenkarte, und zwar unter Verwendung von Disparitäten in Paaren von Bildern, die zumindest für jedes der rechten Kanäle $14_{11}$ - $14_{14}$ zumindest ein Paar aufweisen, das ein Bild aufweist, das durch den jeweiligen rechten Kanal aufgenommen ist, und ein weiteres Bild, das durch eines der linken Kanäle aufgenommen ist.

Bei dem Ausführungsbeispiel, bei dem die Tiefenkarte durch den Prozessor 85 erzeugt wird, ist es auch möglich, dass vorerwähnte Warpen für die gesamten Bilder, die durch die rechten Kanäle aufgenommen sind, auf Basis der Tiefenkarte vorzunehmen. Da die Tiefenkarte über das Gesamtgesichtsfeld 28 hinweg Tiefeninformationen aufweist, ist es möglich, die gesamten Bilder, die durch die rechten Kanäle aufgenommen sind, d.h. nicht nur in den Überlappbereichen derselben, sondern auch in den Nicht-Überlappbereichen, auf einen virtuellen gemeinsamen Aperturpunkt bzw. ein virtuelles optisches Zentrum zu warpen.

Die beiden Alternativen können auch beide durch den Prozessor 85 abgearbeitet werden: Er könnte zunächst die beiden Gesamtbilder, nämlich eines für die rechten optischen Kanäle und das andere für die linken optischen Kanäle, wie oben beschrieben erzeugen, indem bei der Verschmelzung der Bilder der rechten Kanäle in den Überlappbereichen zwischen den Bildern der rechten Kanäle auch Disparitäten aus Paaren von Bildern verwendet werden, von denen eines zu den Bildern der linken Kanäle gehört, und bei der Verschmelzung der Bilder der linken Kanäle in den Überlappbereichen zwischen den Bildern der linken Kanäle auch Disparitäten aus Paaren von Bildern verwendet werden, von denen eines zu den Bildern der rechten Kanäle gehört, um dann aus den so gewonnen Gesamtbildern, die die Szene in dem Gesamtgesichtsfeld aus unterschiedlichen Perspektiven darstellen, ein Gesamtbild mit zugehöriger Tiefenkarte zu erzeugen, wie z.B. ein Gesamtbild, das zu einer virtuellen Ansicht bzw. bzw. zu einem virtuellen optischen Zentrum zwischen den optischen Zentren der Optiken der rechten und linken optischen Kanäle liegt, möglicher Weise aber nicht ausschließlich mittig dazwischen. Zur Berechnung der Tiefenkarte und zum Warpen eines der beiden Gesamtbilder oder Warpen und Verschmelzen beider Gesamtbilder in die virtuelle Ansicht verwendete der Prozessor 85 dann das rechte und linke Gesamtbild, quasi als Zwischenergebnis aus der vorangegangenen Verschmelzung der linken bzw. rechten Einzelbilder. Der Prozessor wertete hier also Disparitäten in den beiden Zwischenergebnisgesamtbildern aus, um die Tiefenkarte zu erhalten und das Warpen oder Warpen/Verschmelzen derselben durchzuführen.

Es sei erwähnt, dass der Prozessor die Auswertung von Disparitäten in einem Paar von Bildern beispielsweise vermittels Kreuzkorrelation von Bildbereichen durchführt.

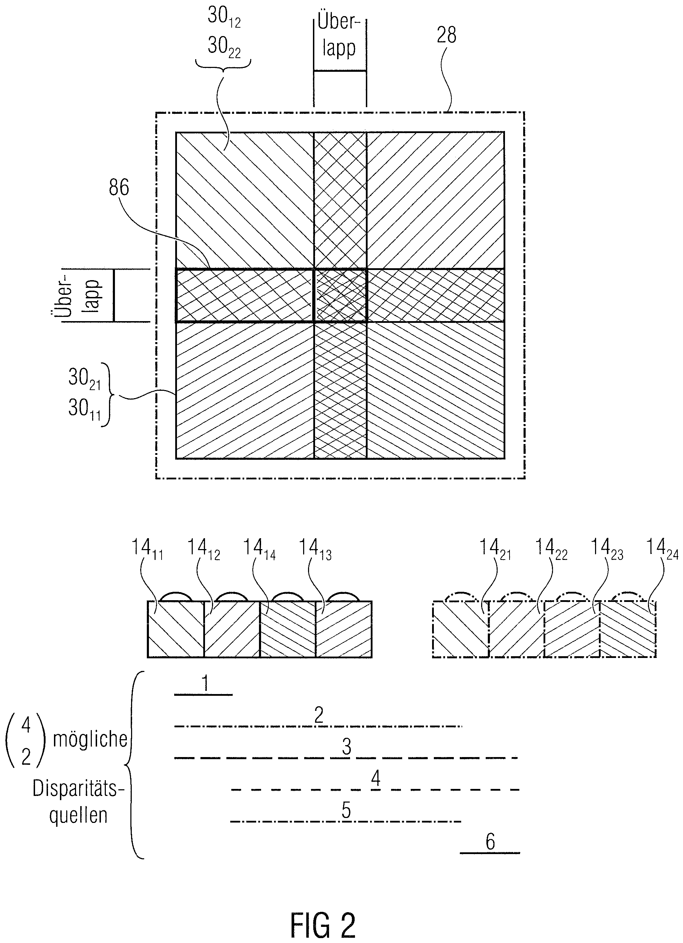

Fig. 2 zeigt noch, dass der Prozessor 85 als Basis zur Verschmelzung von Bildern, die durch ein Paar von Bildsensoren ausgenommen wurden, auf die ein Paar von Optiken der linken Kanäle ein Paar von unmittelbar benachbarten Teilgesichtsfeldern abbildet, wie es exemplarisch für die Teilgesichtsfelder $30_{11}$ und $30_{12}$ der Fall ist, über diese Paar von Bildern hinaus noch Disparitäten in einem oder mehreren weiteren der insgesamt

$$\binom{4}{2},$$ d.h. "Zwei aus Vier", Disparitätsquellen verwenden kann, d.h. Paare von Bildern von Bildsensorbereichen, die Disparitäten zu Szenenobjekten in dem Überlappbereich zwischen diesem Paar von unmittelbar benachbarten Teilgesichtsfeldern betreffen. In Fig. 2 ist dies exemplarisch für den kreuzschraffierten Überlappbereich zwischen den Teilgesichtsfelder $30_{11}$ und $30_{12}$ angedeutet: Neben dem zu verschmelzenden Paar von Bildern der rechten Kanäle $14_{11}$ und $14_{12}$ selbst (Disparitätsquelle 1) existieren vier Paare von Bildern, von denen eines durch einen rechten Kanal und eines durch einen linken Kanal auf einen jeweiligen Bildsensorbereich abgebildet und von letzterem aufgenommen wird (Disparitätsquelle 2,3,4, 5), nämlich Bilder die vermittels der Kanäle $14_{11}$ und $14_{21}$ aufgenommen sind (Disparitätsquelle 2), Bilder die vermittels der Kanäle $14_{11}$ und $14_{22}$ aufgenommen sind (Disparitätsquelle 3), Bilder die vermittels der Kanäle $14_{12}$ und $14_{22}$ aufgenommen sind (Disparitätsquelle 4) und Bilder die vermittels der Kanäle $14_{12}$ und $14_{21}$ aufgenommen sind (Disparitätsquelle 5). Ferner existiert ein Paar von Bildern, von denen beide durch einen linken Kanal auf einen jeweiligen Bildsensorbereich abgebildet und von letzterem aufgenommen wird (Disparitätsquelle 6, Paarung $14_{21}$ mit $14_{22}$). Der Prozessor kann einen oder mehrere der zusätzlichen Quellen 2 bis 5 zur Verschmelzungsunterstützung verwenden. Berechnet der Prozessor 85 gemäß oben angesprochener Alternative auch eine Tiefenkarte für das Gesamtgesichtsfeld 28, so kann der Prozessor entsprechend der Vorgehensweise bei der Bildverschmelzung die Tiefenkarte an jedem Punkt des Gesichtsfeldes 28 aus der Auswertung der Disparitäten von mehr als einem Paar von Bildern bestimmen, von denen eines durch einen rechten Kanal und eines durch einen linken Kanal auf einen jeweiligen Bildsensorbereich abgebildet und von letzterem aufgenommen wird, nämlich an Punkten, an denen sich über das Teilgesichtsfeld eines rechten Kanals und das Teilgesichtsfeld eines linken Kanals hinaus noch ein anderes Paar gegenseitig überlappt. In Fig. 2 ist dies lediglich an den Überlappbereichen von Teilgesichtsfeldern rechter Kanäle der Fall, die aufgrund der Kongruenz mit den Teilgesichtsfeldern linker Kanäle mit den Überlappbereichen von Teilgesichtsfeldern linker Kanäle identisch sind, aber bei anderen Ausführungsbeispielen liegt die Kongruenz gegebenenfalls vielleicht nicht vor.

Es sei erwähnt, dass bei einer anderen Abdeckung des Gesamtgesichtsfeldes 28 durch die Teilgesichtsfelder der linken Kanäle einerseits und durch die Teilgesichtsfelder der rechten Kanäle andererseits sich ggf. auch mehr als vier Kanäle (unbeachtlich ihrer Zugehörigkeit zu den linken oder rechten Kanälen) einander gegenseitig überlappen, wie es z.B. ja auch an dem gegenseitigen Überlapp zwischen den Überlappbereichen von in Zeilenrichtung oder Spaltenrichtung benachbarten Teilgesichtsfeldern der bisherigen Beispiele der Fall war, wo die Teilgesichtsfelder der rechten Kanäle sowie die Teilgesichtsfelder der linken Kanäle jeweils für sich in Spalten und Zeilen angeordnet waren. Dann gilt für die Anzahl an Disparitätsquellen ganz allgemein, dass sie

$$\binom{N}{2},$$ wobei N die Anzahl der Kanäle mit sich miteinander überlappenden Teilgesichtsfeldern bezeichne.

Zusätzlich zur vorhergehenden Beschreibung sei noch erwähnt, dass der Prozessor 85 optional u.a. noch eine kanalweise Korrektur perspektivischer Abbildungsstörungen des jeweiligen Kanals vornimmt.

Es sei darauf hingewiesen, dass das Ausführungsbeispiel von Fig. 1 in vielerlei Hinsicht lediglich exemplarisch war. Das betrifft beispielsweise die Anzahl an optischen Kanälen. Beispielsweise beträgt die Anzahl an rechten optischen Kanälen nicht Vier, sondern ist irgendwie größer gleich 2 oder liegt zwischen 2 und 10, beides inklusive, und der Überlappbereich der Teilgesichtsfelder der rechten optischen Kanäle kann, soweit für jedes Teilgesichtsfeld bzw. jeden Kanal, das Paar mit dem größten Überlapp zu dem jeweiligen Teilgesichtsfeld betrachtet wird, flächenmäßig für all diese Paare zwischen 1/2 und 1/1000 einer mittleren Bildgröße der Bilder, die von den Bildbereichen $12_{11}$ - $12_{14}$ aufgenommen werden, liegen, gemessen beispielsweise in der Bildebene, d.h. der Ebene der Bildsensorbereiche. Gleiches gilt beispielsweise für die linken Kanäle. Die Anzahl kann allerdings zwischen den rechten Kanälen und den linken Kanälen unterschiedlich sein. Das heißt, dass die Anzahl der linken optischen Kanäle, $N_L$, und rechten optischen Kanäle, $N_R$, nicht unbedingt gleich sein muss und eine Aufteilung des Gesamtgesichtsfeldes 28 in die Teilgesichtsfelder der linken Kanäle und die Teilgesichtsfelder der rechten Kanäle nicht in etwa gleich zu sein hat, wie dies bei Fig. 1 der Fall war. Hinsichtlich der Teilgesichtsfelder und deren Überlapp kann es sich beispielsweise so verhalten, dass die Teilgesichtsfelder beispielsweise um mindestens 20 Pixel ineinander ragen, soweit eine Bildentfernung bzw. Objektentfernung von 10 m betrachtet wird, jedenfalls für alle Paare mit größtem Überlapp, wobei dies für die rechten Kanäle ebenso wie für die linken Kanäle gelten kann.

Anders als im Vorhergehenden erörtert, ist es zudem nicht notwendig, dass die linken optischen Kanäle bzw. die rechten optischen Kanäle einzeilig gebildet sind. Die linken und/oder die rechten Kanäle könnten auch ein zweidimensionales Array von optischen Kanälen bilden. Zudem ist es nicht notwendig, dass die einzeiligen Arrays eine kollineare Zeilenerstreckungsrichtung aufweisen. Die Anordnung von Fig. 1 ist allerdings vorteilhaft, da sie zu einer minimalen Bauhöhe senkrecht zu der Ebene ergibt, in welcher die optischen Achsen der optischen Kanäle, d.h. sowohl der rechten als auch der linken Kanäle, vor bzw. ohne Strahlumlenkung, führt. Hinsichtlich des Bildsensors 12 war bereits erwähnt worden, dass selbiger aus ein, zwei oder mehreren Chips gebildet sein kann. Beispielsweise könnte ein Chip pro Bildsensorbereich $12_{11}$ - $12_{14}$ und $12_{21}$ - $12 24$ vorgesehen sein, wobei in dem Fall mehrerer Chips selbige auf einem oder mehreren Platinen befestigt sein können, wie z.B. eine Platine für die linken Kanäle bzw. die Bildsensoren der linken Kanäle und eine Platine für die Bildsensoren der rechten Kanäle.

Bei dem Ausführungsbeispiel von Fig. 1 ist es also möglich, benachbarte Kanäle innerhalb der Kanäle der rechten oder linken Kanäle so dicht wie möglich zu platzieren, wobei im optimalen Fall der Kanalabstand 19 dem Linsendurchmesser entspricht. Hieraus ergibt sich ein geringer Kanalabstand und mithin eine geringe Disparität. Die rechten Kanäle einerseits und die linken Kanäle andererseits können aber zueinander mit einem beliebigen Abstand 15 angeordnet werden, so dass sich große Disparitäten realisieren lassen. Insgesamt ergibt sich die Möglichkeit einer artefaktreduzierten oder auch -freien Bildfusion und eine Erstellung von Tiefenkarten mit einem passiven optischen Abbildungssystem.

Gegenüber obigen Beispielen wäre es möglich, mehr als nur zwei Gruppen von Kanälen $14_1$ und $14_2$ zu verwenden, sondern mehr. Die Gruppenanzahl könnte mit N bezeichnet werden. Wären dann auch in diesem Fall die Anzahl von Kanälen pro Gruppe gleich sowie die Gesamtgesichtsfeldaufteilung in Teilgesichtsfelder für alle Gruppen gleich, dann ergäbe sich pro Überlappbereich von Teilgesichtsfeldern der Gruppe $14_1$ beispielsweise eine Anzahl von Disparitätsquellen von $\binom{2N}{2}$.

Eine unterschiedliche Gesamtgesichtsfeldaufteilung für die Gruppen von Kanälen ist aber ebenfalls denkbar, wie oben schon erwähnt wurde.

Schließlich wird darauf hingewiesen, dass bei der vorhergehenden Beschreibung lediglich der exemplarische Fall aufgegriffen wurde, dass der Prozessor 85 die Bilder der rechten Kanäle verschmilzt. Selbiges Vorgehen könnte von dem Prozessor 85 wie im Vorhergehenden erwähnt für beide bzw. alle Kanalgruppen durchgeführt werden, oder auch für die linke oder dergleichen.

Die 3D-Multiaperturabbildungsvorrichtung von Fig. 1 kann beispielsweise in ein flaches Gehäuse eines mobilen Geräts, wie z.B. eines Mobiltelefons, eingebaut sein. Dabei kann die Ebene der Bildsensorbereiche $12_{11}$ - $12_{14}$ und $12_{21}$ - $12_{24}$ sowie jegliche Linsenebene der Optiken der linken und rechten Kanäle parallel zu einer Dickenrichtung des flachen Gehäuses verlaufen. Durch die Strahlumlenkung durch die Strahlumlenkvorrichtung $24_1$ bzw. $24_2$ läge das Gesamtgesichtsfeld der 3D-Multiaperturabbildungsvorrichtung beispielsweise vor einer Vorderseite, in welcher beispielsweise ein Bildschirm des mobilen Geräts positioniert ist, oder vor einer Rückseite des mobilen Geräts.

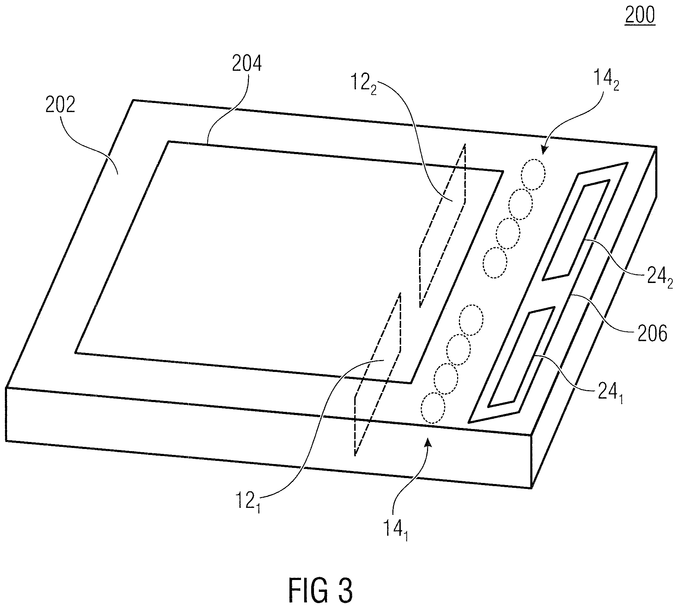

Fig. 3 illustriert, wie die Vorrichtung 10 der vorher beschrieben Alternativen beispielsweise in einem flachen Gehäuse eines tragbaren Geräts 200 eingebaut ist, das zum Beispiel ein Mobiltelefon, ein Smartphone oder ein Mediaplayer oder dergleichen sein kann. Die Ebene der Bildsensorbereiche der Teile $12_1$ und $12_2$ und die Linsenebenen der Optiken der Kanäle $14_1$ und $14_2$ sind senkrecht zu der flachen Erstreckungsrichtung des flachen Gehäuses bzw. parallel zur Dickenrichtung ausgerichtet. Auf diese Weise würde beispielsweise die Strahlumlenkvorrichtung $24_1$ bzw. $24_2$ dafür sorgen, dass das Gesamtgesichtsfeld der Multiaperturabbildungsvorrichtung 10 vor einer Vorderseite 202 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 202 gegenüberliegt, befindet. Das Gehäuse könnte ein transparentes Fenster 206 in der durchdrungenen Seite 202 aufweisen, um die Strahlengänge der Gruppen von optischen Kanälen, $14_1$ und $14_2$, durchzulassen. Das Gehäuse des Geräts 200 bzw. das Gerät selbst kann flach sein, da durch die illustrierte Lage der Vorrichtung 10 in dem Gehäuse, die Bauhöhe der Vorrichtung 10, die zur Dicke des Gehäuses parallel ist, geringgehalten werden kann. Ein Verbau der Vorrichtung 10 in ein anderes ggf. nicht tragbares Gerät, wie z.B. eine Auto, wäre natürlich ebenfalls möglich.

Zu der Strahlumlenkvorrichtung $24_1$ bzw. $24_2$ ist zu sagen, dass selbige ein optionales Element darstellt. Die Divergenz der Strahlengänge der optischen Kanäle, d.h. der rechten Kanäle unter sich einerseits und der linken Kanäle unter sich andererseits, könnte auch auf andere Weise erzeugt werden als unter Verwendung einer jeweiligen Strahlumlenkvorrichtung $24_1$ - $24_2$. Beispielsweise könnten die optischen Zentren der Optiken der optischen Kanäle zu den zugehörigen Bildsensorbereichen lateral versetzt sein, um eine lediglich teilweise, d.h. unvollständige, Überlappung der Teilgesichtsfelder unter den linken Kanälen einerseits und unter den rechten Kanälen andererseits zu erzeugen.

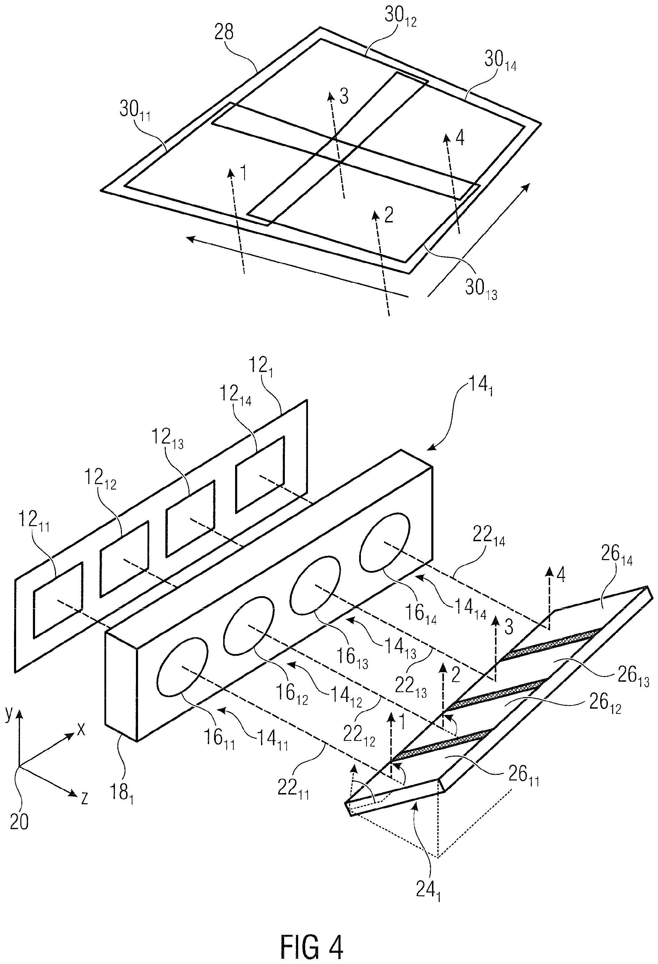

Um das noch einmal näher zu veranschaulichen, zeigt Fig. 4 noch einmal ein konkretes Beispiel für die Konfiguration gemäß Fig. 1, bei der in jedem Modul 1 und 2 die jeweilige Umlenkvorrichtung $24_1$ bzw. $24_2$ die Divergenz aus zunächst zueinander parallelen optischen Achsen $22_1$ bzw. $22_2$ der optischen Kanäle $14_{1\#}$ bzw. $14_{2\#}$ erzeugt. Fig. 4 veranschaulicht der Einfachheit halber nur das Modul 1 mit den rechten Kanälen, aber die Darstellung und Beschreibung gilt natürlich in gleicher Weise für Modul 2.

Fig. 4 zeigt, dass jeder optische Kanal $14_{11}$, $14_{12}$, $14_{13}$, $14_{14}$ vermittels der zugehörigen Optik $16_{11}$ - $16_{14}$ den jeweiligen kanalindividuellen Ausschnitt $30_{11}$ - $30_{14}$ des Gesamtgesichtsfeldes 28 auf den jeweiligen Bildsensorbereich $12_{11}$, $12_{12}$, $12_{13}$ bzw. $12_{14}$ des Bildsensors $12_1$ abbildet. Die Optiken $16_{11}$ - $16_{14}$ bestehen beispielsweise jeweils aus einer Linse oder einer Gruppe von Linsen, die, wie es in Fig. 4 gezeigt ist, durch einen gemeinsamen Halter $18_1$ gehaltert sein können. Der Halter $18_1$ ist exemplarisch aus transparentem Material gebildet und wird von den Strahlengängen der optischen Kanäle durchdrungen, aber andere Alternativen für Halter existieren natürlich ebenfalls. Die Bildsensorbereiche $12_{11}$ - $12_{14}$ sind in einer gemeinsamen Ebene angeordnet, nämlich der Bildebene der optischen Kanäle $14_1$. In Fig. 4 ist diese Ebene exemplarisch parallel zu der Ebene, die durch eine x- und eine y-Achse eines kartesischen Koordinatensystems aufgespannt wird, das in Fig. 1 zur Vereinfachung der nachfolgenden Beschreibung eingezeichnet und mit dem Bezugszeichen 20 versehen ist. In einem Ausführungsbeispiel wäre es die gleiche Ebene, in welcher die Bildsensorbereiche $12_{21}$ - $12_{24}$ liegen. In einer Ebene parallel zum Bildsensor 12, d.h. parallel zur xy-Ebene, liegen nun beispielsweise auch die Optiken $16_{11}$ - $16_{14}$ nebeneinander angeordnet. In dem Beispiel von Fig. 4 sind die relativen Positionen der Bildsensorbereiche $12_{11}$ - $12_{14}$ in der Bildsensorebene zudem kongruent zu den relativen Positionen der Optiken $16_{11}$ - $16_{14}$ und die Optiken $16_{11}$ - $16_{14}$ entlang der x- und y-Achse, d.h. lateral, relativ zu dem Bildsensor $12_1$ so positioniert, dass optische Zentren der Optiken $16_1$ - $16_4$ zentriert zu Zentren der Bildsensorbereiche $12_{11}$ - $12_{14}$ angeordnet sind. Das bedeutet, dass bei dem Beispiel von Fig. 4 optische Achsen $22_{11}$ - $22_{14}$ der optischen Kanäle $14_{11}$ - $14_{14}$ zunächst parallel zueinander und parallel zu der z-Achse des Koordinatensystems 20 verlaufen, zu welchen optischen Achsen die Bildsensorbereiche $12_{11}$ - $12_{14}$ und die Optiken $16_{11}$ - $16_{14}$ zentriert positioniert sind. Die Ebene der optischen Zentren wäre gemäß einem Ausführungsbeispiel zwischen den Modulen 1 und 2 wieder gleich. Das optional vorhandene Substrat $18_1$ könnte für jedes Modul getrennt vorgesehen sein oder die Optiken beider Module tragen. Es ist es möglich, dass die Vorrichtung über eine oder mehrere Einrichtungen verfügt, die in der Lage sind, eine relative Lage der Optiken $16_{11}$ - $16_{14}$ zu den Bildsensorbereichen $12_{11}$ - $12_{14}$ in lateraler Richtung, d.h. in x- und/oder y-Richtung, zu verändern, wie z.B. zur Bildstabilisierung. Die Optiken $16_{11}$ - $16_{14}$ bilden Objekte in einer Szene in dem Gesamtgesichtsfeld 28 auf die zugehörigen Bildsensorbereiche $12_{11}$ - $12_{14}$ ab und sind dazu in einer entsprechenden Entfernung bzw. unter einem entsprechenden Abstand von dem Bildsensor $12_1$ positioniert. Während dieser Abstand auch fest eingestellt sein könnte, könnte alternativ eine Einrichtung zum Ändern dieses Bildsensor-zu-Optiken Abstands vorgesehen sein, wie z.B. zur manuellen oder automatischen Fokusänderung. Die Strahlumlenkvorrichtung, $24_1$ lenkt nun die Strahlengänge bzw. die optischen Achsen $22_{11}$ - $22_{14}$ der Mehrzahl von optischen Kanäle 14 um, so dass das Gesamtgesichtsfeld 28 nicht in der Richtung der z-Achse liegt, sondern woanders. Fig. 4 stellt den exemplarischen Fall dar, dass das Gesamtgesichtsfeld 28 nach Umlenkung im Wesentlichen entlang der y-Achse liegt, d.h. die Umlenkung im Wesentlichen in der zy-Ebene erfolgt. Nun sind, wie es im Vorhergehenden beschrieben wurde, bei dem Ausführungsbeispiel von Fig. 4 die optischen Achsen $22_{11}$ - $22_{14}$ vor der bzw. ohne die Umlenkung durch die Strahlumlenkvorrichtung $24_1$ bzw. an beispielsweise den Optiken $16_{11}$ - $16_{14}$ parallel zueinander. Die damit korrespondierende zentrierte Positionierung von Optiken $16_{11}$ - $16_{14}$ sowie der Bildsensorbereiche $12_{11}$ - $12_{14}$ ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle $14_{11}$ - $14_{14}$ abgedeckt bzw. auf die jeweiligen Bildsensorbereiche $12_{11}$ - $12_{14}$ abgebildet werden, ohne weitere Maßnahmen, wie nämlich die Strahlumlenkung, nahezu vollständig überlappen würden. Um ein größeres Gesamtgesichtsfeld 28 abzudecken, besteht nun eine weitere Funktion der Strahlumlenkvorrichtung $24_1$ von Fig. 4 darin, die optischen Achsen der Strahlengänge so mit einer Divergenz zu versehen, d.h. die Strahlengänge abzulenken, dass sich die Teilgesichtsfelder $30_{11}$-$30_{14}$ der Kanäle $14_{11}$ - $14_{14}$ weniger gegenseitig überlappen. Bei dem Beispiel von Fig. 4 weisen dazu die den einzelnen optischen Kanälen zugeordneten Facetten $26_{11}$-$26_{14}$ der Umlenkvorrichtung $24_1$ unterschiedliche Neigung gegenseitig zueinander bzw. relativ zum Bildsensor $12_1$ auf, und zwar Neigungen sowohl um die x-Achse als auch senkrecht dazu.

Nun wurde bereits weiter oben darauf hingewiesen, dass die Strahlengänge bzw. optischen Achsen von einer Parallelität vor bzw. Strahlumlenkung abweichen könnten. Dieser Umstand wird im Folgenden damit umschrieben, dass die Kanäle mit einer Art Vorab-Divergenz der optischen Achsen versehen sein können. Mit dieser Vorab-Divergenz der optischen Achsen $22_{11}$ - $22_{14}$ wäre es möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz, d.h. Ablenkung oder auch Richtungsänderung in der anderen Transversalebene, d.h. sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

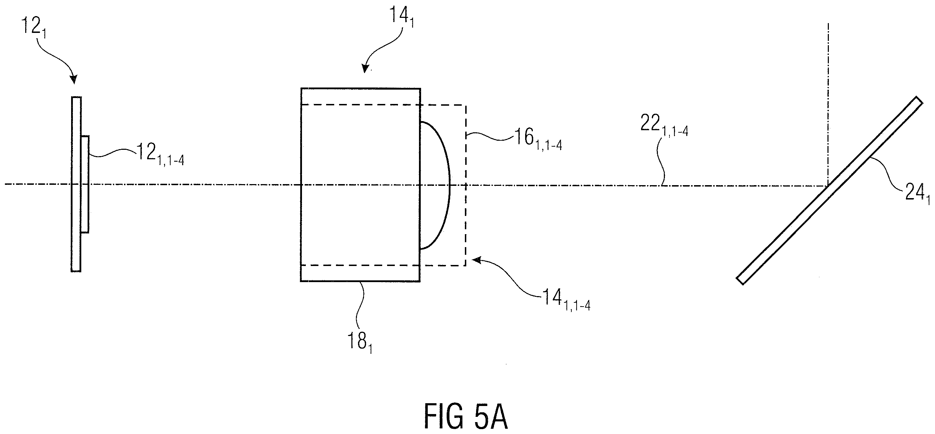

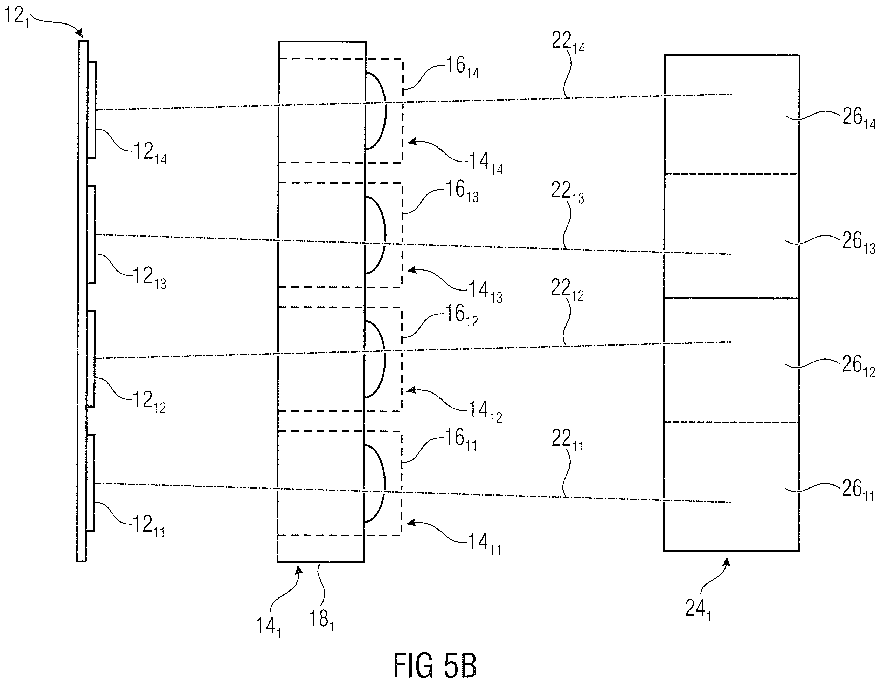

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. Das ist in Fig. 5a und 5b veranschaulicht, bei denen die benachbarten Kanäle $14_{11}$ und $14_{12}$ einerseits und die benachbarten Kanäle $14_{13}$ und $14_{14}$ in der gemeinsamen Ebene verlaufende, jeweils gegeneinander schielende, also mit einer Vorab-Divergenz versehene, optische Achsen $22_{11}$ und $22_{12}$ bzw. $22_{13}$ und $22_{14}$ aufweisen. Die Facetten $26_{11}$ und $26_{12}$ können durch eine Facette gebildet werden und die Facetten $26_{13}$ und $26_{14}$ können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung.

Es sei darauf hingewiesen, dass alternativ zu Fig. 5a und 5b auch die optischen Kanäle 1 und 2 zueinander konvergent sowie die der Kanäle 3 und 4 andererseits zueinander konvergent verlaufen könnten, und die beiden Paare wiederum zueinander divergent, wobei aber wiederum alle optischen Achsen in einer Ebene verlaufen. Die Facetten könnten auf diese Wiese in Zeilenerstreckungsrichtung kleiner ausgeführt sein.

Noch einmal sei darauf hingewiesen, dass die Fig. 4 und 5a,b der Übersichtlichkeit halber lediglich ein Modul zeigten, dass das jeweils andere Modul aber ebenso aufgebaut sein kann. Ferner sei noch einmal erwähnt, dass die Anzahl an Kanälen pro Modul nicht auf vier beschränkt ist.

Ferner könnte es vorgesehen sein, dass in einem Modul manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafter Weise lägen Pixelbilder des Bildsensors eines Kanals einer Gruppe in Zwischenpositionen zwischen Bildern der Pixel des Bildsensors eines anderen Kanals dieser Gruppe. Das Gesamtgesichtsfeld würde demnach, im Sinne einer Ortsauflösung und nicht im Sinne einer Anzahl pro Pixel, durch die Module nicht so abgetastet werden, dass jeder Kanal seinen Teil des Gesamtgesichtsfeldes, also sein Teilgesichtsfeld, mit der vollen Auflösung aufnähme, sondern nur mit einer reduzierten. Erst die Ausnutzung des Pixelversatzes führte zu einem höher aufgelösten Gesamtbild, bei dem jedes Teilgesichtsfeld mehr Pixel aufwiese als die Bilder der dieses Teilgesichtsfeld aufnehmenden Kanäle einzeln betrachtet und nicht gleich viel wie oben. Die Tiefenkarte erhielte man allerdings nur mit der reduzierten Auflösung und nicht wie oben mit der Gesamtbildauflösung bzw. einem Tiefenwert bzw. Tiefenkartenpixel pro Pixel des Gesamtbilds bzw. der Gesamtbilder. Ferner gilt für die Strahlumlenkvorrichtung und den Bildsensor ähnliches wie im Vorhergehenden zu dem Optiksubstrat erwähnt, nämlich dass sich die Module 1 und 2 auch ein jeweiliges Element teilen könnten. Die Strahlumlenkvorrichtung könnte zu Bildstabilisierungszwecken drehbar um eine Achse parallel zu der x-Achse sein. Zusammen mit der translatorischen Bewegung der Optiken entlang der x-Achse ergibt das eine Bildstabilisierung des Gesamtgesichtsfeldes in zwei Richtungen, wobei über eine translatorische Bewegung der Optiken entlang der z-Achse die Fokussteuerung realisierbar ist.

## Patentansprüche

1. 3D-Multiaperturabbildungsvorrichtung zum Bereitstellen von 3D-Informationen einer Szene mit:

    einem Bildsensor (12);
    einer ersten Mehrzahl ($14_1$) von optischen Kanälen ($14_{11}$, $14_{12}$, $14_{13}$, $14_{14}$) zum Abbilden sich überlappender erster Teilgesichtsfelder ($30_{11}$, $30_{12}$, $30_{13}$, $30_{14}$) eines Gesamtgesichtsfeldes (28) auf erste Bildsensorbereiche ($12_{11}$, $12_{12}$, $12_{13}$, $12_{14}$) des Bildsensors;
    einer zweiten Mehrzahl ($14_2$) von optischen Kanälen ($14_{21}$, $14_{22}$, $14_{23}$, $14_{24}$) zum Abbilden sich gegenseitig und mit den ersten Teilgesichtsfeldern überlappender zweiter Teilgesichtsfelder ($30_{21}$, $30_{22}$, $30_{23}$, $30_{24}$) des Gesamtgesichtsfeldes (28) auf zweite Bildsensorbereiche ($12_{21}$, $12_{22}$, $12_{23}$, $12_{24}$) des Bildsensors, wobei die erste und die zweite Mehrzahl von optischen Kanälen um einen Basisabstand (15) voneinander lateral versetzt angeordnet sind;
    wobei die ersten Teilgesichtsfelder ($30_{11}$, $30_{12}$, $30_{13}$, $30_{14}$) zusammen das Gesamtgesichtsfeld (28) abdecken, und die zweiten Teilgesichtsfelder zusammen das Gesamtgesichtsfeld (28) abdecken;
    einem Prozessor (85) zum Verschmelzen von Bildern, die durch die erste Mehrzahl von optischen Kanälen aufgenommen sind, zu einem ersten Gesamtbild, wobei der Prozessor (85) ausgebildet ist, um in einem Überlappbereich (86) von ersten Teilgesichtsfeldern eines Paars von optischen Kanälen der ersten Mehrzahl von optischen Kanälen das Verschmelzen unter Verwendung von Disparitäten in einem Paar von Bildern durchzuführen, von denen zumindest eines durch einen der zweiten Mehrzahl von optischen Kanälen aufgenommen ist, dessen abgebildetes zweites Teilgesichtsfeld mit dem Überlappbereich überlappt.

2. 3D-Multiaperturabbildungsvorrichtung gemäß Anspruch 1, wobei der Basisabstand (15) größer ist als ein einzelner Kanalbasisabstand (19) zwischen zwei benachbarten optischen Kanälen der ersten Mehrzahl von optischen Kanälen und zwischen zwei benachbarten optischen Kanälen der zweiten Mehrzahl von optischen Kanälen.

**3.** 3D-Multiaperturabbildungsvorrichtung gemäß Anspruch 1 oder 2, bei der der Prozessor (85) ausgebildet ist, um
Bilder, die durch die zweite Mehrzahl von optischen Kanälen aufgenommen sind, zu einem zweiten Gesamtbild zu verschmelzen und dabei in einem Überlappbereich von zweiten Teilgesichtsfeldern eines Paars von optischen Kanälen der zweiten Mehrzahl von optischen Kanälen Disparitäten in einem weiteren Paar von Bildern zu verwenden, von denen zumindest eines durch einen der ersten Mehrzahl von optischen Kanälen aufgenommen ist, dessen abgebildetes erstes Teilgesichtsfeld mit dem Überlappbereich der zweiten Teilgesichtsfelder überlappt.

**4.** 3D-Multiaperturabbildungsvorrichtung gemäß Anspruch 3, bei der der Prozessor (85) ausgebildet ist, um
eine Tiefenkarte unter Verwendung von Disparitäten zwischen dem ersten und zweiten Gesamtbild zu erzeugen.

**5.** 3D-Multiaperturabbildungsvorrichtung gemäß Anspruch 4, bei der der Prozessor (85) ausgebildet ist, um
das ersten oder das zweite Gesamtbild in ein virtuelles optisches Zentrum zu warpen oder das erste und zweite Gesamtbild in die virtuelle Ansicht zu warpen und zu verschmelzen, um ein finales Gesamtbild zu erhalten, zu dem die Tiefenkarte gehört.

**6.** 3D-Multiaperturabbildungsvorrichtung gemäß einem der Ansprüche 1 bis 5, bei der der Prozessor (85) so ausgebildet ist, dass die Bilder, die durch die erste Mehrzahl von optischen Kanälen aufgenommen sind, und die Bilder, die durch die zweite Mehrzahl von optischen Kanälen aufgenommen sind, und das erste Gesamtbild eine gleiche laterale Ortsauflösung besitzen.

**7.** 3D-Multiaperturabbildungsvorrichtung gemäß einem der Ansprüche 1 bis 6, bei der der Prozessor (85) so ausgebildet ist, dass die ersten Teilgesichtsfelder, denen die erste Mehrzahl von optischen Kanälen zugeordnet ist, gegenseitig unterschiedlich und kongruent zu den zweiten Teilgesichtsfeldern sind, denen die zweite Mehrzahl von optischen Kanälen zugeordnet ist.

**8.** 3D-Multiaperturabbildungsvorrichtung gemäß Anspruch 1 oder 3, bei der der Prozessor (85) ausgebildet ist, um
eine Tiefenkarte zu dem ersten Gesamtbild unter Verwendung von Disparitäten in Paaren von Bildern zu erzeugen, die zumindest für jedes der ersten Mehrzahl von optischen Kanälen zumindest ein Paar aufweisen, das ein Bild aufweist, das durch den jeweiligen der ersten Mehrzahl von optischen Kanälen aufgenommen ist, und ein weiteres Bild, das durch eines der zweiten Mehrzahl von optischen Kanälen aufgenommen ist.

**9.** 3D-Multiaperturabbildungsvorrichtung gemäß einem der Ansprüche 1 bis 8, bei der eine Anzahl der ersten Mehrzahl von optischen Kanälen zwischen 2 und 100, beide inclusive, liegt, und der Überlappbereich der ersten Teilgesichtsfeldern des Paars von optischen Kanälen der ersten Mehrzahl von optischen Kanälen flächenmäßig zwischen 1/2 und 1/1000 einer mittleren Bildgröße der Bilder liegt, die von der ersten Mehrzahl von optischen Kanälen aufgenommen werden.

**10.** 3D-Multiaperturabbildungsvorrichtung gemäß einem der Ansprüche 1 bis 9, bei der eine Anzahl der zweiten Mehrzahl von optischen Kanälen zwischen 2 und 100, beide inclusive, liegt, und ein Überlappbereich der zweiten Teilgesichtsfelder eines Paars von optischen Kanälen der Zweiten Mehrzahl von optischen Kanälen flächenmäßig zwischen 1/2 und 1/1000 einer mittleren Bildgröße der Bilder liegt, die von der ersten Mehrzahl von optischen Kanälen aufgenommen werden.

**11.** 3D-Multiaperturabbildungsvorrichtung gemäß einem der Ansprüche 1 bis 10, bei der die Anzahl der ersten und zweiten Mehrzahl von optischen Kanälen gleich ist und eine Aufteilung des Gesamtgesichtsfeldes in die ersten Teilgesichtsfelder gleich ist zu der Aufteilung des Gesamtgesichtsfeldes in die zweiten Teilgesichtsfelder.

**12.** 3D-Multiaperturabbildungsvorrichtung gemäß einem der Ansprüche 1 bis 11, bei der die Teilgesichtsfelder des Paars von optischen Kanälen der ersten Mehrzahl von optischen Kanälen um eine Weite des Überlappbereichs von wenigstes 20 Pixel der Bilder, die durch das Paar von optischen Kanälen der ersten Mehrzahl von optischen Kanälen aufgenommen sind, bei einer Bildentfernung von 10 m ineinander ragen.

**13.** 3D-Multiaperturabbildungsvorrichtung gemäß einem der Ansprüche 1 bis 11, bei der die erste und zweite Mehrzahl von optischen Kanälen jeweils als ein einzeiliges Array gebildet und auf einer Linie entlang einer Zeilenerstreckungsrichtung derselben unter dem Basisabstand versetzt zueinander nebeneinander angeordnet sind.

**14.** 3D-Multiaperturabbildungsvorrichtung gemäß einem der Ansprüche 1 bis 13, der der Prozessor (85) ausgebildet ist, um die Disparitäten unter Verwendung einer Kreuzkorrelation lokaler Abschnitte des Paars von Bildern zu bestimmen.

15. Verfahren zum Verschmelzen von Bildern, die durch eine 3D-Multiaperturabbildungsvorrichtung aufgenommen sind, die einen Bildsensor (12), eine ersten Mehrzahl ($14_1$) von optischen Kanälen ($14_{11}$, $14_{12}$, $14_{13}$, $14_{14}$) zum Abbilden sich überlappender erster Teilgesichtsfelder ($30_{11}$, $30_{12}$, $30_{13}$, $30_{14}$) eines Gesamtgesichtsfeldes (28) auf erste Bildsensorbereiche ($12_{11}$, $12_{12}$, $12_{13}$, $12_{14}$) des Bildsensors und eine zweiten Mehrzahl ($14_2$) von optischen Kanälen ($14_{21}$, $14_{22}$, $14_{23}$, $14_{24}$) zum Abbilden sich gegenseitig und mit den ersten Teilgesichtsfeldern überlappender zweiter Teilgesichtsfelder ($30_{21}$, $30_{22}$, $30_{23}$, $30_{24}$) des Gesamtgesichtsfeldes (28) auf zweite Bildsensorbereiche ($12_{21}$, $12_{22}$, $12_{23}$, $12_{24}$) des Bildsensors, wobei die erste und die zweite Mehrzahl von optischen Kanälen um einen Basisabstand (15) voneinander lateral versetzt angeordnet sind, wobei die ersten Teilgesichtsfelder zusammen das Gesamtgesichtsfeld (28) abdecken, und die zweiten Teilgesichtsfelder zusammen das Gesamtgesichtsfeld (28) abdecken; aufweist, wobei der Verfahren folgendes Merkmal aufweist:

Verschmelzen von Bildern, die durch die erste Mehrzahl von optischen Kanälen aufgenommen sind, zu einem ersten Gesamtbild, und zwar indem in einem Überlappbereich (86) von ersten Teilgesichtsfeldern eines Paars von optischen Kanälen der ersten Mehrzahl von optischen Kanälen das Verschmelzen unter Verwendung von Disparitäten in einem Paar von Bildern durchgeführt wird, von denen zumindest eines durch einen der zweiten Mehrzahl von optischen Kanälen aufgenommen ist, dessen abgebildetes zweites Teilgesichtsfeld mit dem Überlappbereich überlappt.

**Claims**

1. 3D multi-aperture imaging device for providing 3D information on a scene, comprising:

    an image sensor (12);
    a first plurality ($14_1$) of optical channels ($14_{11}$, $14_{12}$, $14_{13}$, $14_{14}$) for projecting overlapping first partial fields of view ($30_{11}$, $30_{12}$, $30_{13}$, $30_{14}$) of a total field of view (28) on first image sensor areas ($12_{11}$, $12_{12}$, $12_{13}$, $12_{14}$) of the image sensor;
    a second plurality ($14_2$) of optical channels ($14_{21}$, $14_{22}$, $14_{23}$, $14_{24}$) for projecting second partial fields of view ($30_{21}$, $30_{22}$, $30_{23}$, $30_{24}$) of the total field of view (28) that overlap with one another and with the first partial fields of view on second image sensor areas ($12_{21}$, $12_{22}$, $12_{23}$, $12_{24}$) of the image sensor, wherein the first and second pluralities of optical channels are arranged laterally offset from one another by a base distance (15);
wherein the first partial fields of view ($30_{11}$, $30_{12}$, $30_{13}$, $30_{14}$) together cover the total field of view (28) and the second partial fields of view together cover the total field of view (28);
a processor (85) for fusing images that have been captured by the first plurality of optical channels to a first total image, wherein the processor (85) is configured to perform fusion in an overlap area (86) of first partial fields of view of a pair of optical channels of the first plurality of optical channels by using disparities in a pair of images, wherein at least one of them has been captured by one of the second plurality of optical channels whose projected second partial field of view overlaps with the overlap area.

2. 3D multi-aperture imaging device according to claim 1, wherein the base distance (15) is greater than a single channel base distance (19) between two adjacent optical channels of the first plurality of optical channels and between two adjacent optical channels of the second plurality of optical channels.

3. 3D multi-aperture imaging device according to claim 1 or 2, wherein the processor (85) is configured to fuse images that have been captured by the second plurality of optical channels to a second total image and to use, in an overlap area of second partial fields of view of a pair of optical channels of the second plurality of optical channels, disparities in a further pair of images, wherein at least one of them has been captured by one of the first plurality of optical channels whose projected first partial field of view overlaps with the overlap area of the second partial fields of view.

4. 3D multi-aperture imaging device according to claim 3, wherein the processor (85) is configured to generate a depth map by using disparities between the first and second total images.

5. 3D multi-aperture imaging device according to claim 4, wherein the processor (85) is configured to warp the first or the second total image into a virtual optical center or to warp and to fuse the first and second total images into the virtual view in order to obtain a final total image to which the depth map belongs.

6. 3D multi-aperture imaging device according to one of claims 1 to 5, wherein the processor (85) is configured such that the images that have been captured by the first plurality of optical channels and the images that have been captured by the second plurality of optical channels and the first total image have an equal lateral spatial resolution.

**7.** 3D multi-aperture imaging device according to one of claims 1 to 6, wherein the processor (85) is configured such that the first partial fields of view to which the first plurality of optical channels is allocated, are mutually different and congruent to the second partial fields of view to which the second plurality of optical channels is allocated.

**8.** 3D multi-aperture imaging device according to claim 1 or 3, wherein the processor (85) is configured to generate a depth map for the first total image by using disparities in pairs of images comprising, at least for each of the first plurality of optical channels, at least one pair comprising an image that has been captured by the respective one of the first plurality of optical channels and a further image that has been captured by one of the second plurality of optical channels.

**9.** 3D multi-aperture imaging device according to one of claims 1 to 8, wherein a number of the first plurality of optical channels is between 2 and 100, both inclusive, and the overlap area of the first partial fields of view of the pair of optical channels of the first plurality of optical channels is, as regards to the area, between 1/2 and 1/1000 of an average image size of the images that are captured by the first plurality of optical channels.

**10.** 3D multi-aperture imaging device according to one of claims 1 to 9, wherein a number of the second plurality of optical channels is between 2 and 100, both inclusive, and an overlap area of the second partial fields of view of a pair of optical channels of the second plurality of optical channels is, as regards to the area, between 1/2 and 1/1000 of an average image size of the images that are captured by the first plurality of optical channels.

**11.** 3D multi-aperture imaging device according to one of claims 1 to 10, wherein the number of first and second pluralities of optical channels is the same and a division of the total field of view into the first partial fields of view is equal to the division of the total field of view into the second partial fields of view.

**12.** 3D multi-aperture imaging device according to one of claims 1 to 11, wherein the partial fields of view of the pair of optical channels of the first plurality of optical channels project into one another by a width of the overlap area of at least 20 pixels of the images that have been captured by the pair of optical channels of the first plurality of optical channels, at an image distance of 10 m.

**13.** 3D multi-aperture imaging device according to one of claims 1 to 11, wherein the first and second pluralities of optical channels are each formed as a single line array and are juxtaposed on a line along a line extension direction of the same, offset to one another by the base distance.

**14.** 3D multi-aperture imaging device according to one of claims 1 to 13, wherein the processor (85) is configured to determine the disparities by using a cross-correlation of local sections of the pair of images.

**15.** Method for fusing images that have been captured by a 3D multi-aperture imaging device comprising an image sensor (12), a first plurality ($14_1$) of optical channels ($14_{11}$, $14_{12}$, $14_{13}$, $14_{14}$) for projecting overlapping first partial fields of view ($30_{11}$, $30_{12}$, $30_{13}$, $30_{14}$) of a total field of view (28) on first image sensor areas ($12_{11}$, $12_{12}$, $12_{13}$, $12_{14}$) of the image sensor and a second plurality ($14_2$) of optical channels ($14_{21}$, $14_{22}$, $14_{23}$, $14_{24}$) for projecting second partial fields of view ($30_{21}$, $30_{22}$, $30_{23}$, $30_{24}$) of the total field of view (28) that overlap with one another and with the first partial fields of view on second image sensor areas ($12_{21}$, $12_{22}$, $12_{23}$, $12_{24}$) of the image sensor, wherein the first and second pluralities of optical channels are arranged laterally offset from one another by a base distance (15), wherein the first partial fields of view together cover the total field of view (28) and the second partial fields of view together cover the total field of view (28); the method comprising:

fusing images that have been captured by the first plurality of optical channels to a first total image, by performing fusion in an overlap area (86) of first partial fields of view of a pair of optical channels of the first plurality of optical channels by using disparities in a pair of images, wherein at least one of them has been captured by one of the second plurality of optical channels whose projected second partial field of view overlaps with the overlap area.

**Revendications**

**1.** Dispositif d'imagerie multi-ouvertures 3D destiné à fournir des informations 3D d'une scène, avec:

un capteur d'image (12);
une première pluralité ($14_1$) de canaux optiques ($14_{11}$, $14_{12}$, $14_{13}$, $14_{14}$) destinés à reproduire des premiers champs de vision partiels se chevauchant ($30_{11}$, $30_{12}$, $30_{13}$, $30_{14}$) d'un champ de vision global (28) sur des premières zones de capteur d'image ($12_{11}$, $12_{12}$, $12_{13}$, $12_{14}$) du capteur d'image;
une deuxième pluralité ($14_2$) de canaux optiques ($14_{21}$, $14_{22}$, $14_{23}$, $14_{24}$) destinés à reproduire des deuxièmes champs partiels ($30_{21}$, $30_{22}$, $30_{23}$, $30_{24}$), se chevauchant mutuellement et avec les premiers champs partiels, du champ de vision global (28) sur des deuxièmes zones de capteur d'image ($12_{21}$, $12_{22}$, $12_{23}$, $12_{24}$) du capteur d'image, où les premiers et les deuxièmes canaux optiques sont disposés décalés latéralement les uns par rapport aux autres d'une distance de base (15);

dans lequel les premiers champs de vision partiels ($30_{11}$, $30_{12}$, $30_{13}$, $30_{14}$) couvrent ensemble le champ de vision global (28), et les deuxièmes champs de vision partiels couvrent ensemble le champ de vision global (28);

un processeur (85) destiné à fusionner les images qui sont captées par la première pluralité de canaux optiques pour obtenir une première image globale, où le processeur (85) est conçu pour effectuer, dans une zone de chevauchement (86) de premiers champs de vision partiels d'une paire de canaux optiques de la première pluralité de canaux optiques, la fusion à l'aide des disparités dans une paire d'images dont au moins une est captée par l'un de la deuxième pluralité de canaux optiques dont le deuxième champ de vision partiel reproduit se chevauche avec la zone de chevauchement.

2. Dispositif d'imagerie multi-ouvertures 3D selon la revendication 1, dans lequel la distance de base (15) est supérieure à une distance de base de canal individuelle (19) entre deux canaux optiques adjacents de la première pluralité de canaux optiques et entre deux canaux optiques adjacents de la deuxième pluralité de canaux optiques.

3. Dispositif d'imagerie multi-ouvertures 3D selon la revendication 1 ou 2, dans lequel le processeur (85) est conçu pour
fusionner des images captées par la deuxième pluralité de canaux optiques pour obtenir une deuxième image globale et utiliser, dans une zone de chevauchement de deuxièmes champs de vision partiels d'une paire de canaux optiques de la deuxième pluralité de canaux optiques, les disparités dans une autre paire d'images dont au moins l'une est captée par l'un de la première pluralité de canaux optiques dont le premier champ de vision partiel se chevauche avec la zone de chevauchement des deuxièmes champs de vision partiels.

4. Dispositif d'imagerie multi-ouvertures 3D selon la revendication 3, dans lequel le processeur (85) est conçu pour
générer une carte de profondeur à l'aide des disparités entre la première et la deuxième image globale.

5. Dispositif d'imagerie multi-ouvertures 3D selon la revendication 4, dans lequel le processeur (85) est conçu pour
déformer la première ou la deuxième image globale dans un centre optique virtuel, ou pour déformer et fusionner la première et la deuxième image globale dans la vue virtuelle pour obtenir une image globale finale à laquelle appartient la carte de profondeur.

6. Dispositif d'imagerie multi-ouvertures 3D selon l'une des revendications 1 à 5, dans lequel le processeur (85) est conçu de sorte que les images qui sont captées par la première pluralité de canaux optiques et les images qui sont captées par la deuxième pluralité de canaux optiques et la première image globale possèdent une même résolution spatiale latérale.

7. Dispositif d'imagerie multi-ouvertures 3D selon l'une des revendications 1 à 6, dans lequel le processeur (85) est conçu de sorte que les premiers champs de vision partiels auxquels est associée la première pluralité de canaux optiques soient différents entre eux et congruents avec les deuxièmes champs de vision partiels auxquels est associée la deuxième pluralité de canaux optiques.

8. Dispositif d'imagerie multi-ouvertures 3D selon la revendication 1 ou 3, dans lequel le processeur (85) est conçu pour
générer une carte de profondeur pour la première image globale à l'aide des disparité dans des paires d'images qui présentent, au moins pour chacun de la première pluralité de canaux optiques. au moins une paire qui présente une image qui a été captée par le canal respectif de la première pluralité de canaux optiques, et une autre image qui a été captée par l'un de la deuxième pluralité de canaux optiques.

9. Dispositif d'imagerie multi-ouvertures 3D selon l'une des revendications 1 à 8, dans lequel un nombre de la première pluralité de canaux optiques est compris entre 2 et 100, tous deux inclus, et la zone de chevauchement des premiers champs de vision partiels de la paire de canaux optiques de la première pluralité de canaux optiques est comprise en surface entre 1/2 et 1/1000 d'une grandeur d'image moyenne des images qui sont captées par la première pluralité de canaux optiques.

10. Dispositif d'imagerie multi-ouvertures 3D selon l'une des revendications 1 à 9, dans lequel un nombre de la deuxième pluralité de canaux optiques est compris entre 2 et 100, tous deux inclus, et une zone de chevauchement des deuxièmes champs de vision partiels d'une paire de canaux optiques de la deuxième pluralité de canaux optiques est comprise en surface entre 1/2 et 1/1000 d'une grandeur d'image moyenne des images qui sont captées par la première pluralité de canaux optiques.

11. Dispositif d'imagerie multi-ouvertures 3D selon l'une des revendications 1 à 10, dans lequel le nombre de la première et de la deuxième pluralité de canaux optiques est identique et une division du champ de vision global en premiers champs de vision partiels est égale à la division du champ de vision global en deuxièmes champs de vision partiels.

12. Dispositif d'imagerie multi-ouverture 3D selon l'une des revendications 1 à 11, dans lequel les champs de vision partiels de la paire de canaux optiques de la première pluralité de canaux optiques pénètrent l'un dans l'autre d'une étendue de la zone de chevauchement d'au moins 20 pixels des images qui sont captées par la paire de canaux optiques de la première pluralité de canaux optiques, à une distance d'image de 10 m.

13. Dispositif d'imagerie multi-ouvertures 3D selon l'une des revendications 1 à 11, dans lequel la première et la deuxième pluralité de canaux optiques se présentent, chacune, sous forme d'un réseau d'une seule ligne et sont disposées juxtaposées et décalées l'une par rapport à l'autre sur une ligne dans une direction d'extension de ligne de ces dernières de la distance de base.

14. Dispositif d'imagerie multi-ouvertures 3D selon l'une des revendications 1 à 13, dans lequel le processeur (85) est conçu pour déterminer les disparités à l'aide d'une corrélation croisée de segments locaux de la paire d'images.

15. Procédé de fusion d'images qui sont captées par un dispositif d'imagerie multi-ouvertures 3D qui présente un capteur d'image (12), une première pluralité ($14_1$) de canaux optiques ($14_{11}$, $14_{12}$, $14_{13}$, $14_{14}$) destinée à reproduire des premiers champs de vision partiels se chevauchant ($30_{11}$, $30_{12}$, $30_{13}$, $30_{14}$) d'un champ de vision global (28) sur des premières zones de capteur d'image ($12_{11}$, $12_{12}$, $12_{13}$, $12_{14}$) du capteur d'image et une deuxième pluralité ($14_2$) de canaux optiques ($14_{21}$, $14_{22}$, $14_{23}$, $14_{24}$) destinée à reproduire des deuxièmes champs de vision partiels ($30_{21}$, $30_{22}$, $30_{23}$, $30_{24}$), se chevauchant mutuellement et avec les premiers champs partiels, du champ de vision global (28) sur des deuxièmes zones de capteur d'image ($12_{21}$, $12_{22}$, $12_{23}$, $12_{24}$) du capteur d'image, où la première et la deuxième pluralité de canaux optiques sont disposées décalées latéralement l'une par rapport à l'autre d'une distance de base (15), où les premiers champs de vision partiels couvrent ensemble le champ de vision total (28) et les deuxièmes champs de vision partiels couvrent ensemble le champ de vision global (28), le procédé présentant la caractéristique suivante consistant à:

fusionner les images qui sont captées par la première pluralité de canaux optiques pour obtenir une première image globale, et ce en réalisant, dans une zone de chevauchement (86) de premiers champs de vision partiels d'une paire de canaux optiques de la première pluralité de canaux optiques, la fusion à l'aide des disparités dans une paire d'images dont au moins l'une est captée par l'un de la deuxième pluralité de canaux optiques dont le deuxième champ de vision partiel reproduit se chevauche avec la zone de chevauchement.

FIG 1

FIG 2

FIG 3

EP 3 342 148 B1

FIG 4

FIG 5A

EP 3 342 148 B1

FIG 5B

EP 3 342 148 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011063347 A2
- US 9013543 B1

- DE 102013222780 B3